# FASCICULE DE BREVET EUROPEEN

(11) **EP 3 012 239 B1**
(45) Date de publication et mention de la délivrance du brevet: **09.10.2019**
(21) Numéro de dépôt: 14189958.3
(22) Date de dépôt: 22.10.2014
(51) Int. Cl.: C04B 35/48, C04B 35/486, C04B 35/626, C04B 35/634, G04B 37/22

(54) **Procédé de fabrication d'un article de couleur grise à base de zircone et article décoratif gris à base de zircone obtenu selon ce procédé**
Herstellungsverfahren eines Artikels von grauer Farbe auf der Basis von Zirkoniumoxid, und nach diesem Verfahren erhaltener Dekorationsartikel von grauer Farbe auf der Basis von Zirkoniumoxid
Method for manufacturing a zirconia-based grey article, and grey zirconia decorative article obtained according to said method

(43) Date de publication de la demande: 27.04.2016
(73) Titulaire: Comadur S.A., 2400 Le Locle (CH)
(72) Inventeur: Actis-Datta, M. Arnaud, 1950 Sion (CH); Cartier, Damien, 25000 Besançon (FR)
(74) Mandataire: Ravenel, Thierry Gérard Louis

(56) Documents cités:
- EP-A1- 2 639 210
- EP-A2- 0 700 880
- EP-A2- 1 818 318
- EP-A2- 1 859 757
- WO-A2-2012/085875
- JP-A- H01 157 462
- JP-A- H08 310 860
- JP-A- S62 128 967
- JP-B2- 2 861 066

## Description

L'invention concerne un procédé de fabrication d'un article à base de zircone présentant une couleur comprise dans la gamme des gris et réalisé par frittage. Un tel article sera désigné dans la suite de la description "article gris" pour des raisons de commodités.

L'invention concerne également un article décoratif gris à base de zircone notamment obtenu selon le procédé ci-dessus.

Il est déjà connu du document CN102659401 de réaliser des articles en matériaux céramiques gris par traitement thermique d'une zircone dans un four graphite sous vide qui produit une oxydation noire/grise superficielle de l'article. Ce procédé présente notamment l'inconvénient de ne pas colorer l'article dans la masse de sorte qu'il empêche tout usinage ultérieur de l'article après traitement pour lui donner sa forme définitive. Par ailleurs la couleur en surface obtenue n'est pas uniforme mais présente des veinages et marbrures non désirés.

Le document JP S62 128967 décrit une zircone colorée dans les tons de vert ou de jaune comprenant de l'oxyde de vanadium dans des proportions de 0,1% à 10% en poids.

Le document WO 2012/085875 décrit une pièce frittée colorée à base de zircone utilisant différentes familles de pigments selon la couleur désirée.

Le document JP 2 861066 décrit une pièce d'habillage horloger en céramique colorée.

L'invention a donc pour but principal de fournir d'une part un procédé de fabrication d'un article gris à base de zircone frittée et d'autre part un tel article notamment obtenu selon ce procédé, cet article ayant des propriétés mécaniques comparables à celles de la zircone non colorée tout en présentant une coloration dans la masse.

A cet effet, l'invention a pour objet un procédé de fabrication d'un article gris à base de zircone caractérisé par le fait qu'il comprend les étapes successives consistant à :
a) réaliser un premier mélange comprenant :
   - une poudre de zircone formant le constituant de base,
   - 4 à 15% en poids d'au moins un stabilisant choisi parmi l'ensemble des oxydes comprenant l'oxyde d'yttrium, l'oxyde de magnésium, et l'oxyde de calcium seuls ou en combinaison,
   - 0,1% à 1% en poids d'une poudre d'oxyde de vanadium (V₂O₅);
   - 0,1 % à 1% en poids d'une poudre d'oxyde de silicium (SiO₂), et
   - 0,1% à 1% en poids d'une poudre de d'oxyde de chrome (Cr₂O₃) ;
b) réaliser un deuxième mélange comprenant ledit premier mélange et un liant;
c) réaliser un mélange granulé en opérant une granulation dudit deuxième mélange;
d) former une ébauche en conférant à ce deuxième mélange granulé la forme de l'article désiré;
e) fritter sous air ladite ébauche pendant au moins trente minutes à une température comprise entre 1250 et 1550 DEG. C.

Le procédé de l'invention permet par l'incorporation, dans une poudre de zircone stabilisée, d'un mélange de poudres d'oxyde de vanadium, de d'oxyde de chrome et d'oxyde de silicium, de réaliser après mise en forme et frittage un article en céramique coloré dans la masse qui présente une couleur uniforme dans la gamme des gris. Le procédé de l'invention permet de réaliser des articles en céramique gris dont l'aspect esthétique est particulièrement attrayant sans par ailleurs altérer les propriétés mécaniques intrinsèques de la zircone non colorée.

Selon un mode de réalisation de l'invention, le premier mélange comprend :
- 0,4% à 0,7% en poids d'une poudre d'oxyde de vanadium (V₂O₅);
- 0,2% à 0, 3% en poids d'une poudre d'oxyde de chrome (Cr₂O₃).
- 0,2 % à 0,3% en poids d'une poudre d'oxyde de silicium (SiO₂),

Avantageusement, le premier mélange comprend en outre entre 0,1% à 1% et de préférence entre 0,2 et 0,3% en poids d'une poudre d'oxyde manganèse (MnO₂). Dans une variante de réalisation le premier mélange comprend en outre 0,1% à 1% en poids d'une poudre d'oxyde fer (Fe₂O₃) et de manière préférée le premier mélange comprend en outre 0,1% à 5% en poids d'une poudre d'oxyde d'aluminium (Al₂O₃).

L'invention a également pour objet une composition de moulage par injection ou pressage, communément désignée par feedstock selon la terminologie anglo-saxonne, destinée à la fabrication d'un article décoratif et/ou fonctionnel gris comprenant 75% à 96% en poids d'un mélange de poudres inorganiques et 4 à 25% en poids d'un liant, ledit mélange de poudres comprenant :
- 82 à 95.7% en poids d'une poudre de zircone ;
- 4 à 15 % en poids d'au moins un stabilisant choisi parmi l'ensemble des oxydes comprenant l'oxyde d'yttrium, l'oxyde de magnésium, et l'oxyde de calcium seuls ou en combinaison ;
- 0,1% à 1% en poids d'une poudre d'oxyde de vanadium (V2O5);
- 0,1% à 1% en poids d'une poudre d'oxyde de chrome (Cr2O3) ; et
- 0,1 % à 1% en poids d'une poudre d'oxyde de silicium (SiO2).

Selon un mode préféré de réalisation, le liant et le mélange de poudres inorganiques se présentant sous la forme de granules aptes à être utilisées comme feedstock pour l'injection dans un moule ou sous la forme de poudres prêtes à presser dans un moule. Avantageusement, le mélange de poudres inorganiques comprend en outre entre 0,1% à 1% et de préférence entre 0,2 et 0,3% en poids d'une poudre d'oxyde manganèse (MnO₂). De manière encore plus préférée le mélange de poudres inorganiques comprend en outre 0,1% à 5% en poids d'une poudre d'oxyde d'aluminium (Al₂O₃). Selon une variante le mélange de poudres inorganiques comprend en outre 0,1% à 1% en poids d'une poudre d'oxyde fer (Fe₂O₃).

L'invention a également pour objet un article décoratif et/ou fonctionnel gris à base de zircone, caractérisé en ce qu'il est constitué d'une pièce frittée à partir d'une pièce moulée comprenant en substance une matrice d'oxyde de zirconium, 4 à 15 % en poids d'au moins un stabilisant choisi parmi l'ensemble des oxydes comprenant l'oxyde d'yttrium, l'oxyde de magnésium, et l'oxyde de calcium et leurs mélanges, 0,1 à 1% en poids d'oxyde de vanadium (V2O5); 0,1 à 1% en poids d'oxyde de chrome (Cr2O3), 0,1 à 1% en poids d'oxyde de silicium (SiO2).

De tels articles ont l'avantage de présenter un brillant intense après polissage et sont ainsi particulièrement adaptés à la réalisation d'articles décoratifs tels que des éléments constitutifs de boîtes de montre, des bijoux, des bracelets, des broches, des épingles de cravate, des colliers, des sacs à main, des téléphones, du mobilier, ou des ustensiles ménagers.

Selon un mode de réalisation avantageux, l'article comprend 0,4% à 0,7% en poids d'oxyde de vanadium (V₂O₅), 0,2% à 0,3% en poids de d'oxyde de chrome (Cr₂O₃) et 0,2 % à 0,3% en poids d'oxyde de silicium (SiO₂).

Dans une première variante, l'article comprend en outre entre 0,1% à 1% et de préférence entre 0,2 et 0,3% en poids d'oxyde manganèse (MnO₂), 0,1% à 5% en poids d'oxyde d'aluminium (Al₂O₃) et 0,1% à 1% en poids d'oxyde fer (Fe₂O₃).

D'autres caractéristiques et avantages de l'invention apparaîtront à la lumière de la description suivante présentant des exemples de mise en oeuvre du procédé de l'invention non limitatifs et seulement donnés à titre illustratif.

Un premier exemple du procédé de fabrication de l'invention qui va maintenant être décrit en détail permet de réaliser un article à base de zircone frittée gris dont l'aspect et les propriétés mécaniques sont particulièrement adaptés à la réalisation de pièces constitutives de montres bracelet ou à la réalisation de tout autre article décoratif et/ou fonctionnel.

L'article en zircone gris obtenu selon ce premier exemple comprend 98.8% en poids de zircone stabilisée et le complément en poids de 0,5 % en poids d'une poudre d'oxyde de vanadium (V2O5); 0,2 % en poids d'une poudre d'oxyde de silicium (SiO2), et 0,5 % en poids d'une poudre d'oxyde de chrome (Cr2O3).

La zircone est stabilisée de façon classique en phase tétragonale par au moins un stabilisant choisi parmi l'ensemble des oxydes comprenant l'oxyde d'yttrium, l'oxyde de magnésium, et l'oxyde de calcium seuls ou en combinaison, ce stabilisant étant en quantité de 5% en poids par rapport à la zircone.

Pour réaliser cet article, on procède selon cet exemple de mise en oeuvre du procédé de l'invention de la façon suivante :
On pèse 2470 grammes de poudre de zircone stabilisée à 5 % en poids d'oxyde d'yttrium. La poudre utilisée a une taille granulométrique moyenne de l'ordre du micromètre ou submicrométrique, typiquement, de 0,5 micromètre. Une telle poudre est vendue sous la référence TZ-3Y par la société Tosoh Corporation, Japon.

On pèse ensuite 30 grammes d'un mélange de poudre d'oxyde de silicium, d'oxyde de vanadium, et d'oxyde de chrome.

La poudre de silicium utilisée a une taille granulométrique 2 Micron APS et est vendue sous la référence No 13024 par la société Alfa Aesar , Allemagne. La poudre d'oxyde de vanadium utilisée a une taille granulométrique moyenne de l'ordre de grandeur du micromètre ou submicrométrique typiquement 22 Mesh et est vendue sous la référence No 10904 par la société Alfa Aesar, Allemagne.

La poudre d'oxyde de Chrome utilisée a une taille granulométrique moyenne de l'ordre de grandeur du micromètre ou submicrométrique, typiquement de 2,4 micromètres et est vendue sous la référence No 374725 par la société Sigma Aldrich Chemie, Suisse. Le cas échéant la poudre est broyée pour atteindre la granulométrie souhaitée.

On notera que toutes ces poudres doivent de préférence présenter une pureté supérieure à 95%.

Une fois le pesage des poudres terminé, l'ensemble de ces poudres sont mélangées et homogénéisées en milieu humide. Dans la phase finale d'homogénéisation, on ajoute environ 50 grammes d'un liant, par exemple un alcool polyvinylique.

On procède ensuite au séchage du mélange par exemple dans un atomiseur classique.

Le granulé obtenu est tamisé pour conserver les particules ayant une granulométrie inférieure à 200 micromètres.

Le granulé tamisé est ensuite pressé dans un moule ayant la configuration de l'article que l'on désire obtenir afin de former une ébauche de ce dernier.

L'article dans sa forme générale quasi finale est placé dans un four de frittage. On notera à ce propos que le frittage peut être effectué sous air. L'article est alors chauffé dans une première phase à une vitesse de 30 DEG. par heure jusqu'à environ 1'000 DEG. C, puis dans une deuxième phase à une vitesse de 50 DEG. par heure jusqu'à la température de 1'450 DEG. C. L'article est maintenu à cette température pendant au moins trente minutes et de préférence pendant une heure.

On notera que le frittage peut bien entendu être effectué à toute autre température supérieure ou égale à 1'100 DEG. et inférieure à 1'600 DEG. C.

La couleur de l'article obtenu après l'opération de frittage est un gris franc.

L'article est alors refroidi puis usiné pour obtenir une forme adaptée à son utilisation finale. On notera que la coloration est réalisée dans la masse si bien qu'une opération d'usinage de l'article n'altère aucunement sa couleur.

Enfin, l'article est poli par exemple à l'aide d'une pâte de diamant, l'article ainsi obtenu a un aspect brillant gris clair de sorte qu'il présente des caractéristiques esthétiques attractives et intéressantes, notamment pour des applications dans le domaine horloger.

Selon un autre exemple de réalisation du procédé de l'invention, on a suivi le mode opératoire décrit précédemment pour réaliser des lunettes de montre circulaires de 45 mm de diamètre et de 4mm d'épaisseur. Dans cet exemple on a utilisé une combinaison de V₂O₅ (0,63%), de Cr₂O₃ (0,25%), SiO₂ (0,25%), MnO₂ (0,25%) et d'Al₂O₃ (0,25%) formant un composé dont la proportion en poids de la composition totale est de 1,63%, et le solde soit 98,37 % en poids de ZrO₂ stabilisée. Une fois configurées dans leur forme finale désirée, les lunettes et boites de montre ont été frittées sous air pendant 2 heures à 1450 DEG.C. Les lunettes et boites de montre ont été refroidies puis polies miroir. Les lunettes et boites de montre obtenues avaient un aspect brillant gris foncé. On a également constaté après rupture d'une boite que la coloration s'est faite dans la masse.

Selon encore un autre exemple de réalisation du procédé de l'invention, on a suivi le mode opératoire décrit précédemment pour réaliser des lunettes de montre circulaires de 45 mm de diamètre et de 4mm d'épaisseur. Dans cet exemple on a utilisé une combinaison de V₂O₅ (0,75%), de Cr₂O₃ (0,5%), SiO₂ (0,30%), de MnO₂ (0,10%), d'Al₂O₃ (0,25%) et de Fe₂O₃ (0,25%) formant un composé dont la proportion en poids de la composition totale est de 2,15%, et le solde soit 97,85 % en poids de ZrO2 stabilisée. Une fois configurées dans leur forme finale désirée, les lunettes ont été frittées sous air pendant 2 heures à 1450 DEG.C. Les lunettes ont été refroidies puis polies miroir. Les lunettes obtenues avaient un aspect brillant gris légèrement brunâtre. On a également constaté après rupture d'une lunette que la coloration s'est faite dans la masse.

Le tableau suivant montre d'autres exemples d'articles réalisés suivant l'invention (avec les couleurs obtenues selon leur composition).

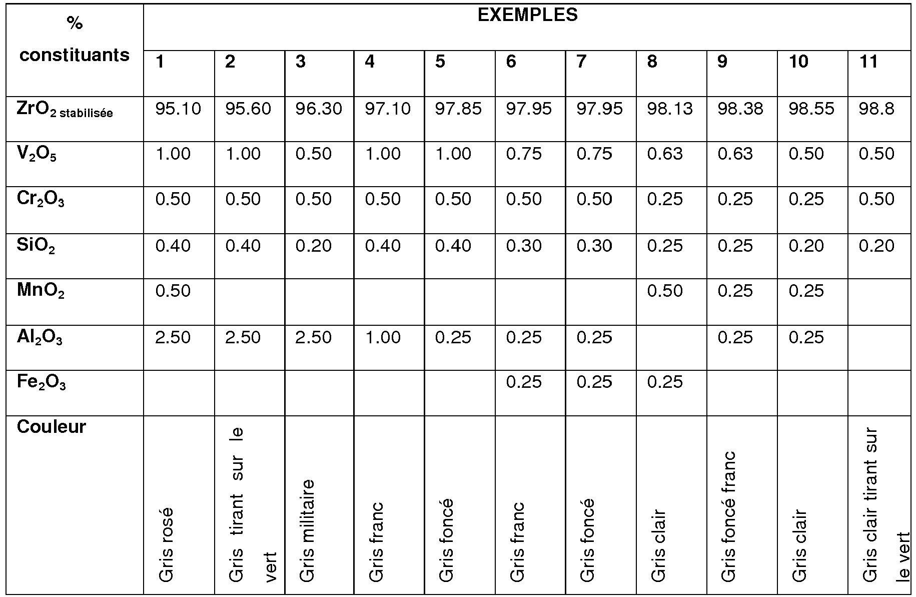

## Revendications

1. Procédé de fabrication d'un article gris à base de zircone **caractérisé par le fait qu'**il comprend les étapes successives consistant à :
a) réaliser un premier mélange comprenant :
- une poudre de zircone formant le constituant de base,
- 4% à 15% en poids d'au moins un stabilisant choisi parmi l'ensemble des oxydes comprenant l'oxyde d'yttrium, l'oxyde de magnésium, et l'oxyde de calcium seuls ou en combinaison,
- 0,1% à 1% en poids d'une poudre d'oxyde de vanadium (V₂O₅);
- 0,1% à 1% en poids d'une poudre de d'oxyde de chrome (Cr₂O₃); et
- 0,1% à 1% en poids d'une poudre d'oxyde de silicium (SiO₂),
b) réaliser un deuxième mélange comprenant ledit premier mélange et un liant;
c) réaliser un mélange granulé en opérant une granulation dudit deuxième mélange;
d) former une ébauche en conférant à ce deuxième mélange granulé la forme de l'article désiré;
e) fritter sous air ladite ébauche pendant au moins trente minutes à une température comprise entre 1250 et 1550 DEG. C.

2. Procédé selon la revendication 1, **caractérisé en ce que** le premier mélange comprend :
- 0,4% à 0,7% en poids d'une poudre d'oxyde de vanadium (V₂O₅);
- 0,2% à 0,3% en poids d'une poudre d'oxyde de chrome (Cr₂O₃); et
- 0,2% à 0,3% en poids d'une poudre d'oxyde de silicium (SiO₂).

3. Procédé selon la revendication 1 ou 2, dans lequel le premier mélange comprend en outre entre 0,1%à 1% et de préférence entre 0,2% et 0,3% en poids d'une poudre d'oxyde manganèse (MnO₂).

4. Procédé selon l'une des revendications précédentes, dans lequel le premier mélange comprend en outre 0,1% à 5% en poids d'une poudre d'oxyde d'aluminium (Al₂O₃).

5. Procédé selon l'une des revendications précédentes, dans lequel le premier mélange comprend en outre 0,1% à 1% en poids d'une poudre d'oxyde fer (Fe₂O₃).

6. Procédé selon l'une quelconque des revendications précédentes, **caractérisé en ce que** le stabilisant est l'oxyde d'yttrium.

7. Procédé selon l'une quelconque des revendications précédentes, **caractérisé en ce qu'**il comprend en outre une étape de polissage de l'article après l'étape e).

8. Composition de moulage par injection ou pressage, destinée à la fabrication d'un article décoratif et/ou fonctionnel gris comprenant 75 à 96% en poids d'un mélange de poudres inorganiques et 4% à 25% en poids d'un liant, ledit mélange de poudres inorganiques comprenant :
- 82% à 95.7% en poids de poudre de zircone
- 4% à 15% en poids d'au moins un stabilisant choisi parmi l'ensemble des oxydes comprenant l'oxyde d'yttrium, l'oxyde de magnésium, et l'oxyde de calcium seuls ou en combinaison,
- 0,1% à 1% en poids d'une poudre d'oxyde de vanadium (V₂O₅);
- 0,1% à 1% en poids d'une poudre d'oxyde de chrome (Cr₂O₃); et
- 0,1% à 1% en poids d'une poudre d'oxyde de silicium (SiO₂).

9. Composition de moulage selon la revendication 8, **caractérisée en ce que** ledit mélange de poudres inorganiques comprend :
- 0,4% à 0,7% en poids d'une poudre d'oxyde de vanadium (V₂O₅);
- 0,2% à 0, 3% en poids d'une poudre d'oxyde de chrome (Cr₂O₃); et
- 0,2% à 0,3% en poids d'une poudre d'oxyde de silicium (SiO₂).

10. Composition de moulage selon la revendication 8 ou 9, dans laquelle le mélange des poudres inorganiques comprend en outre entre 0,1% à 1% et de préférence entre 0,2% et 0,3% en poids d'une poudre d'oxyde manganèse (MnO₂).

11. Composition de moulage selon l'une des revendications 8 à 10, dans laquelle le mélange de poudres inorganiques comprend en outre 0,1% à 5% en poids d'une poudre d'oxyde d'aluminium (Al₂O₃).

12. Composition de moulage selon l'une des revendications 8 à 11, dans lequel le mélange comprend en outre 0,1% à 1% en poids d'une poudre d'oxyde fer (Fe₂O₃).

13. Article décoratif et/ou fonctionnel gris à base de zircone obtenu notamment selon le procédé selon les revendications 1 à 7, **caractérisé en ce qu'**il est constitué d'une pièce frittée à partir d'une pièce moulée comprenant en substance une matrice d'oxyde de zirconium, 4% à 15% en poids d'au moins un stabilisant choisi parmi l'ensemble des oxydes comprenant l'oxyde d'yttrium, l'oxyde de magnésium, et l'oxyde de calcium et leurs mélange, 0,1% à 1% en poids d'oxyde de vanadium (V₂O₅); 0,1% à 1% en poids d'oxyde de chrome (Cr₂O₃), et 0,1% à 1% en poids d'oxyde de silicium (SiO₂).

14. Article selon la revendication 13, **caractérisé en ce qu'**il comprend 0,4% à 0,7% en poids d'oxyde de vanadium (V₂O₅), 0,2% à 0,3% en poids de d'oxyde de chrome (Cr₂O₃), et 0,2% à 0,3% en poids d'oxyde de silicium (SiO₂),

15. Article selon la revendication 13 ou 14, **caractérisé en ce qu'**il comprend en outre entre 0,1 % à 1% et de préférence entre 0,2% et 0,3% en poids d'oxyde manganèse (MnO₂).

16. Article selon l'une des revendications 13 à 15, **caractérisé en ce qu'**il comprend en outre 0,1% à 5% en poids d'oxyde d'aluminium (Al₂O₃).

17. Article selon l'une des revendications 13 à 16, **caractérisé en ce qu'**il comprend en outre 0,1% à 1% en poids d'oxyde fer (Fe₂O₃).

18. Article selon l'une des revendications 13 à 17, **caractérisé en ce qu'**il forme un élément constitutif d'une pièce d'horlogerie.

## Patentansprüche

1. Verfahren zur Herstellung eines Artikels von grauer Farbe auf der Basis von Zirkoniumoxid, **dadurch gekennzeichnet, dass** es die aufeinanderfolgenden Schritte enthält, die umfassen:
a) Anfertigung eines ersten Gemisches, das enthält:
- ein Zirkoniumoxidpulver, das den Grundbestandteil bildet,
- 4 bis 15 Gew.-% mindestens eines Stabilisators, ausgewählt aus der Gruppe der Oxide, die Yttriumoxid, Magnesiumoxid und Calciumoxid jeweils allein oder in Kombination enthält,
- 0,1 bis 1 Gew.-% eines Vanadiumoxidpulvers (V₂O₅),
- 0,1 bis 1 Gew.-% eines Chromoxidpulvers (Cr₂O₃); und
- 0,1 bis 1 Gew.-% eines Siliciumoxidpulvers (SiO₂),
b) Anfertigung eines zweiten Gemisches, das das erste Gemisch und ein Bindemittel enthält;
c) Anfertigung eines granulierten Gemisches durch Ausführen einer Granulierung des zweiten Gemisches;
d) Bilden eines Rohlings, indem diesem granulierten zweiten Gemisch die Form des gewünschten Artikels verliehen wird;
e) Sintern in Luft des Rohlings für mindestens dreißig Minuten bei einer Temperatur im Bereich von 1250 bis 1550 °C.

2. Verfahren nach Anspruch 1, **dadurch gekennzeichnet, dass** das erste Gemisch enthält:
- 0,4 bis 0,7 Gew.-% eines Vanadiumoxidpulvers (V₂O₅),
- 0,2 bis 0,3 Gew.-% eines Chromoxidpulvers (Cr₂O₃); und
- 0,2 bis 0,3 Gew.-% eines Siliciumoxidpulvers (SiO₂).

3. Verfahren nach Anspruch 1 oder 2, wobei das erste Gemisch ferner 0,1 bis 1 Gew.-% und vorzugsweise 0,2 bis 0,3 Gew.-% eines Manganoxidpulvers (MnO₂) enthält.

4. Verfahren nach einem der vorhergehenden Ansprüche, wobei das erste Gemisch ferner 0,1 bis 5 Gew.-% eines Aluminiumoxidpulvers (Al₂O₃) enthält.

5. Verfahren nach einem der vorhergehenden Ansprüche, wobei das erste Gemisch ferner 0,1 bis 1 Gew.-% eines Eisenoxidpulvers (Fe₂O₃) enthält.

6. Verfahren nach einem der vorhergehenden Ansprüche, **dadurch gekennzeichnet, dass** der Stabilisator Yttriumoxid ist.

7. Verfahren nach einem der vorhergehenden Ansprüche, **dadurch gekennzeichnet, dass** es ferner einen Schritt zum Polieren des Artikels nach dem Schritt e) umfasst.

8. Spritzguss- oder Pressformmasse, bestimmt zur Anfertigung eines dekorativen und/oder funktionalen Artikels von grauer Farbe, der 75 bis 96 Gew.-% eines Gemisches anorganischer Pulver und 4 bis 25 Gew.-% eines Bindemittels enthält, wobei das Gemisch anorganischer Pulver enthält:
- 82 bis 95,7 Gew.-% Zirkoniumoxidpulver,
- 4 bis 15 Gew.-% mindestens eines Stabilisators, ausgewählt aus der Gruppe von Oxiden, die Yttriumoxid, Magnesiumoxid und Calciumoxid jeweils allein oder in Kombination enthält,
- 0,1 bis 1 Gew.-% eines Vanadiumoxidpulvers (V₂O₅),
- 0,1 bis 1 Gew.-% eines Chromoxidpulvers (Cr₂O₃); und
- 0,1 bis 1 Gew.-% eines Siliciumoxidpulvers (SiO₂).

9. Formmasse nach Anspruch 8, **dadurch gekennzeichnet, dass** das Gemisch anorganischer Pulver enthält:
- 0,4 bis 0,7 Gew.-% eines Vanadiumoxidpulvers (V₂O₅),
- 0,2 bis 0,3 Gew.-% eines Chromoxidpulvers (Cr₂O₃); und
- 0,2 bis 0,3 Gew.-% eines Siliciumoxidpulvers (SiO₂).

10. Formmasse nach Anspruch 8 oder 9, wobei das Gemisch anorganischer Pulver ferner 0,1 bis 1 und vorzugsweise 0,2 bis 0,3 Gew.-% eines Manganoxidpulvers (MnO₂) enthält.

11. Formmasse nach einem der Ansprüche 8 bis 10, wobei das Gemisch anorganischer Pulver ferner 0,1 bis 5 Gew.-% eines Aluminiumoxidpulvers (Al₂O₃) enthält.

12. Formmasse nach einem der Ansprüche 8 bis 11, wobei das Gemisch ferner 0,1 bis 1 Gew.-% eines Eisenoxidpulvers (Fe₂O₃) enthält.

13. Dekorativer und/oder funktionaler Artikel von grauer Farbe auf der Basis von Zirkoniumoxid, der insbesondere gemäß dem Verfahren nach den Ansprüchen 1 bis 7 hergestellt wird, **dadurch gekennzeichnet, dass** er aus einem gesinterten Teil gebildet ist, ausgehend von einem gegossenen Teil, das im Wesentlichen eine Zirkoniumoxidmatrix, 4 bis 15 Gew.-% mindestens eines Stabilisators, ausgewählt aus der Gruppe von Oxiden, die Yttriumoxid, Magnesiumoxid und Calciumoxid und deren Gemische enthält, 0,1 bis 1 Gew.-% Vanadiumoxid (V₂O₅); 0,1 bis 1 Gew.-% Chromoxid (Cr₂O₃) und 0,1 bis 1 Gew.-% Siliciumoxid (SiO₂) enthält.

14. Artikel nach Anspruch 13, **dadurch gekennzeichnet, dass** er 0,4 bis 0,7 Gew.-% Vanadiumoxid (V₂O₅), 0,2 bis 0,3 Gew.-% Chromoxid (Cr₂O₃) und 0,2 bis 0,3 Gew.-% Siliciumoxid (SiO₂) enthält.

15. Artikel nach Anspruch 13 oder 14, **dadurch gekennzeichnet, dass** er ferner 0,1 bis 1 und vorzugsweise 0,2 bis 0,3 Gew.-% eines Manganoxids (MnO₂) enthält.

16. Artikel nach einem der Ansprüche 13 bis 15, **dadurch gekennzeichnet, dass** er ferner 0,1 bis 5 Gew.-% Aluminiumoxid (Al₂O₃) enthält.

17. Artikel nach einem der Ansprüche 13 bis 16, **dadurch gekennzeichnet, dass** er ferner 0,1 bis 1 Gew.-% Eisenoxid (Fe₂O₃) enthält.

18. Artikel nach einem der Ansprüche 13 bis 17, **dadurch gekennzeichnet, dass** er ein Element bildet, das eine Uhr bildet.

## Claims

1. Method for manufacturing a zirconia-based grey article **characterised in that** it comprises the successive steps consisting of:
a) producing a first mixture comprising:
- a zirconia powder forming the base constituent;
- 4 wt% to 15 wt% of at least one stabiliser selected from the group of oxides comprising yttrium oxide, magnesium oxide, and calcium oxide, which can be taken alone or in combination with one another;
- 0.1 wt% to 1 wt% of a vanadium oxide powder (V₂O₅);
- 0.1 wt% to 1 wt% of a chromium oxide powder (Cr₂O₃); and
- 0.1 wt% to 1 wt% of a silicon oxide powder (SiO₂);
b) producing a second mixture comprising said first mixture and a binder;
c) producing a granulated mixture by carrying out a granulation of said second mixture;
d) forming a blank by giving this second granulated mixture the desired shape of the article;
e) sintering said blank in air for at least thirty minutes at a temperature that lies in the range 1,250°C to 1,550°C.

2. Method according to claim 1, **characterised in that** the first mixture comprises:
- 0.4 wt% to 0.7 wt% of a vanadium oxide powder (V₂O₅);
- 0.2 wt% to 0.3 wt% of a chromium oxide powder (Cr₂O₃); and
- 0.2 wt% to 0.3 wt% of a silicon oxide powder (SiO₂).

3. Method according to claim 1 or 2, wherein the first mixture further comprises between 0.1 wt% and 1 wt% and preferably between 0.2 wt% and 0.3 wt% of a manganese oxide powder (MnO₂).

4. Method according to one of the preceding claims, wherein the first mixture further comprises 0.1 wt% to 5 wt% of an aluminium oxide powder (Al₂O₃).

5. Method according to one of the preceding claims, wherein the first mixture further comprises 0.1 wt% to 1 wt% of an iron oxide powder (Fe₂O₃).

6. Method according to any one of the preceding claims, **characterised in that** the stabiliser is yttrium oxide.

7. Method according to any one of the preceding claims, **characterised in that** it further comprises a step of polishing the article after step e).

8. Injection or pressure moulding composition, intended for the manufacture of a decorative and/or functional grey article comprising 75 to 96 wt% of a mixture of inorganic powders and 4 wt% to 25 wt% of a binder, said mixture of inorganic powders comprising:
- 82 wt% to 95.7 wt% of zirconia powder;
- 4 wt% to 15 wt% of at least one stabiliser selected from the group of oxides comprising yttrium oxide, magnesium oxide, and calcium oxide, which can be taken alone or in combination with one another;
- 0.1 wt% to 1 wt% of a vanadium oxide powder (V₂O₅);
- 0.1 wt% to 1 wt% of a chromium oxide powder (Cr₂O₃); and
- 0.1 wt% to 1 wt% of a silicon oxide powder (SiO₂).

9. Moulding composition according to claim 8, **characterised in that** said mixture of inorganic powders comprises:
- 0.4 wt% to 0.7 wt% of a vanadium oxide powder (V₂O₅);
- 0.2 wt% to 0.3 wt% of a chromium oxide powder (Cr₂O₃); and
- 0.2 wt% to 0.3 wt% of a silicon oxide powder (SiO₂).

10. Moulding composition according to claim 8 or 9, wherein the mixture of inorganic powders further comprises between 0.1 wt% and 1 wt% and preferably between 0.2 wt% and 0.3 wt% of a manganese oxide powder (MnO₂).

11. Moulding composition according to one of claims 8 to 10, wherein the mixture of inorganic powders further comprises 0.1 wt% to 5 wt% of an aluminium oxide powder (Al₂O₃).

12. Moulding composition according to one of claims 8 to 11, wherein the mixture further comprises 0.1 wt% to 1 wt% of an iron oxide powder (Fe₂O₃).

13. Decorative and/or functional zirconia-based grey article in particular obtained according to the method according to claims 1 to 7, **characterised in that** it is constituted by a sintered part derived from a moulded part comprising essentially a zirconium oxide matrix, 4 wt% to 15 wt% of at least one stabiliser selected from the group of oxides comprising yttrium oxide, magnesium oxide, and calcium oxide and mixtures thereof, 0.1 wt% to 1 wt% of vanadium oxide (V₂O₅); 0.1 wt% to 1 wt% of chromium oxide (Cr₂O₃), and 0.1 wt% to 1 wt% of silicon oxide (SiO₂).

14. Article according to claim 13, **characterised in that** it comprises 0.4 wt% to 0.7 wt% of vanadium oxide (V₂O₅), 0.2 wt% to 0.3 wt% of chromium oxide (Cr₂O₃), and 0.2 wt% to 0.3 wt% of silicon oxide (SiO₂).

15. Article according to claim 13 or 14, **characterised in that** it further comprises between 0.1 wt% and 1 wt% and preferably between 0.2 wt% and 0.3 wt% of manganese oxide (MnO₂).

16. Article according to one of claims 13 to 15, **characterised in that** it further comprises 0.1 wt% to 5 wt% of aluminium oxide (Al₂O₃).

17. Article according to one of claims 13 to 16, **characterised in that** it further comprises 0.1 wt% to 1 wt% of iron oxide (Fe₂O₃).

18. Article according to one of claims 13 to 17, **characterised in that** it forms a component of a timepiece.
